# EUROPEAN PATENT SPECIFICATION

(11) **EP 2 762 855 B1**
(45) Date of publication and mention of the grant of the patent: **19.06.2019**
(21) Application number: 14152958.6
(22) Date of filing: 29.01.2014
(51) Int. Cl.: G01N 17/02, F24H 9/00

(54) **A tester and a method for testing for corrosion inhibitor level**
Tester und Testverfahren zum Testen der Korrosionsinhibition
Testeur et procédé pour l'essai de niveau d'inhibiteur de corrosion

(30) Priority: 31.01.2013 GB 201301694
(43) Date of publication of application: 06.08.2014
(73) Proprietor: Scalemaster Limited, Stone, Staffordshire ST15 0SR (GB)
(72) Inventor: Jasper, Carl, Stone, Staffordshire ST15 (GB); Glyn, Morgan, Stone, Staffordshire ST15 (GB)
(74) Representative: Avidity IP

(56) References cited:
- WO-A1-01/98753
- GB-A- 2 362 958
- US-A- 5 609 740
- US-A1- 2005 211 570

## Description

Aspects of the present invention generally relate to a tester device and method for determining whether the level of corrosion protection afforded by a chemical corrosion inhibitor present in a wet central heating system is adequate at the time of testing.

It is current practice to treat wet central heating systems with a chemical corrosion inhibitor to provide long-term protection from the effects of corrosion in service. Modern wet central heating system installations are typically assembled from separate components that may be fabricated from a range of different metal types, such as copper and copper alloys (for example brass), solder, cast iron and steel, aluminium alloys, and stainless steel. Consequently modem corrosion inhibitor products are formulated to provide protection for a range of metallic materials in the service environment. Generally, chemical corrosion inhibitor products for 'mixed-metal' central heating systems will contain a mixture of active ingredients to offer effective protection for the likely range of system metals. The active corrosion-inhibiting ingredients may be inorganic compounds or organic compounds, or a mixture of both. In terms of electrochemical action the inhibitor ingredients may be anodic, cathodic, or 'film-forming' in character.

Commonly, chemical corrosion inhibitors are added at a concentration sufficient to achieve initial protection from corrosion and to allow for a reserve in solution to maintain protection from corrosion in the longer term.

Where chemical corrosion inhibitors are used it is generally accepted that protection from corrosion should be confirmed at regular service intervals by some form of testing.

Currently, testing such as that outlined in GB2362958 involves taking a small working water sample from the system at a convenient point and carrying out a test using a portable test kit designed for this purpose, or by submitting the water sample to a laboratory for analysis. Methods offered by chemical inhibitor manufacturers and suppliers for on-site testing typically focus on determining the level of one particular ingredient of the product formulation. Laboratory analysis will usually include a wider range of compounds and parameters and offers a more detailed report. Whether the test is on-site or laboratory based the underlying principle is the same - to infer the concentration of the corrosion inhibitor product present in the system and whether this is considered adequate. However, this 'chemical test' approach has a major limitation: the basis of the test is indirect, i.e. it assumes that protection from corrosion is assured if there is sufficient chemical present. Further, the tests available for on-site application also have major limitations:- the tests are themselves commonly chemical based and as such require handling and disposal of chemicals in some form, and the user needs to know with confidence which manufacturer's product is in the system in order to apply the appropriate manufacturer's test.

Ideally a test device and a method of testing of corrosion inhibitor effectiveness offers a means of confirming the level of protection from corrosion based upon a direct measure of corrosion activity, the test method does not involve the use of chemicals, and the test method can be applied to any corrosion inhibitor. A further benefit is that the working water sample is unchanged and may be added back to the system if necessary.

In accordance with a first aspect of the present invention there is provided a test device for determination of the level of corrosion protection afforded by a corrosion inhibitor in a wet central heating system, the device comprising a probe element with a first contact and a second contact, the first contact and the second contact formed from dissimilar metals, the contacts electrically connected to provide respectively through a comparison element a base water decay profile for a base water sample and a working water decay profile for a working water sample over a time period where the working water comprises the base water with a corrosion inhibitor and the comparison element providing means to compare the base water profile with the working water profile to determine a threshold difference indicative of the presence of a corrosion inhibitor in the working water and provide an indicator of the level of corrosion protection afforded, the device characterised in that the contacts are connected through an electrical resistance element with an electrical resistance value to substantially stabilise the electrical current and/or the voltage across the electrical resistance element to inhibit the base water decay profile after an initial fall to a stable value whilst allowing the working water decay to continue so that determination of the threshold difference is set at a time after the probe element is exposed to the working water.

In accordance with further aspects of the present invention there is provided a method of determining the level of corrosion inhibitor effectiveness in a wet central heating system as laid out in claim 9.

Determination of the threshold difference is at a fixed time after the probe element is exposed to the working water. The electrical resistance value may be in the range 1KΩ to 50KΩ possibly 5KΩ.

The base water decay profile may be determined using a sample locally taken to be consistent with the working water. Alternatively the base water decay profile may be taken from a library of such profiles for a location determined by geographic location (postcode) or historical prior determinations as reference base water decay profiles.

The dissimilar metals for the contacts may be chosen based upon the expected or predominant material in a wet central heating system within which the working water flows. The dissimilar metals may be steel and copper. The contacts may be flat or rods or other surfaces with a surface area chosen to provide the working water decay profile. The contacts may be a foil. The contacts may have a surface area less than 5cm² possibly about 1.2cm². The contacts may be presented in the probe on opposite sides of a non-conducting insulating substrate between them. The probe may have connectors whereby the probe is disposable selectively attached to the remainder of the test device as required and one use with dismount after use. The contacts may be sheathed by a sheath element prior to use to ensure the surfaces of the contacts remains clean.

The comparison element may record the working water decay profile against time for comparison with the base water decay profile.

The electrical resistance element may be in series with the contacts.

The indicator may be one or more lights. The lights may be LED elements. The indicator may be digital or analogue to provide a relative determination of the closeness to the desired level of corrosion inhibitor effectiveness in the working water. The test device and/or the comparison element may be provided with a value for the approximate volume of working water in a wet central heating system whereby the indicator provides an indication of a level of necessary corrosion inhibitor needed to be added to achieve the desired level of corrosion effectiveness in the whole volume of working water. The comparison device may determine the level of corrosion inhibitor effectiveness for a range of different corrosion inhibitor sources and solutions.

The time period to determine the base water level decay profile with an electrical resistance element will be 1 to 30 seconds and typically 5 seconds. The time period to determine the working water decay profile will typically be 1 to 10 minutes and typically 4 minutes. The working water decay profile may be determined at instances periodically over the time period.

Embodiments of the invention will now be described by way of example only with reference to the accompanying drawings in which:
Figure 1 is a graph depicting voltage and current decay with time between two dissimilar metal contacts in tap or base water and in working water comprising base water with corrosion inhibitor at a correct working strength;
Figure 2 is a pictorial depiction of a test device system in accordance with first aspects of the present invention;
Figure 3 is a pictorial depiction of a test device in accordance with second aspects of the present invention;
Figure 4 is a pictorial depiction of a test probe element in accordance with aspects of the present invention; and,
Figure 5 is a schematic illustration of a test device in accordance with aspects of the present invention.

It is well known that a metal immersed in an aqueous environment will assume an electrochemical potential with the aqueous water about it. Generally, where the metal is corroding freely the resulting *corrosion potential* will be a balance between the cathodic and anodic reactions taking place on the metal's surface. Different metals will display different corrosion potentials. The corrosion potential may be measured against a suitable reference electrode, such as a saturated calomel electrode.

Where two dissimilar metal contacts are immersed in an aqueous environment in electrical contact with each other their corrosion potentials will merge to meet at some common intermediate value. Electrons will flow from the more active (least noble) metal contact to the least active (more noble) metal contact, resulting in a galvanic electric current flowing in the opposite direction. As a result, the corrosion of the more active least noble metal is generally accelerated, and the corrosion of the least active more noble metal is generally reduced.

Central heating systems are constructed from components fabricated from different metals in direct electrical contact, and hence may be subject to galvanic corrosion in service.

The magnitude of the galvanic current flowing between dissimilar metals can be used as a means of measuring corrosion activity in a wet central heating system. For example, galvanic current is particularly sensitive to dissolved oxygen, a major factor driving corrosion in neutral pH waters, and the presence of corrosion inhibitors. It will be appreciated that the magnitude of the galvanic current is also a function of other parameters, including for example the surface areas of the metals in contact, the conductivity of the aqueous environment and temperature.

Equipment is available for measuring and displaying galvanic current. It is generally accepted that the preferred apparatus for measuring galvanic current is a zero-resistance ammeter or ZRA. As the instrument has, or achieves by design, the equivalent of a zero resistance when measuring electrical current the nature and kinetics of the galvanic corrosion reaction being measured are unaffected and unimpeded. In this way the magnitude of the galvanic current measured is considered to be representative of the actual galvanic current.

There are a number of ways in which galvanic current between dissimilar metals as displayed by a ZRA may be used to determine the effectiveness of corrosion inhibitors used in wet central heating systems. For example a probe element containing dissimilar metal contact elements may be placed in a central heating system circuit and the galvanic current recorded continuously or periodically against time. Alternatively, a suitable dissimilar metal probe may be placed in a sample of working water removed from a wet central heating system and the galvanic current recorded continuously or periodically against time over a period of time.

In either instance, where the system working water contains an effective chemical corrosion inhibitor the magnitude of the galvanic current, specifically the extent to which the galvanic current is suppressed compared with a base water sample not containing an inhibitor, may be used as a measure of the effectiveness of the inhibitor, or the concentration of an inhibitor of known effectiveness. It will be appreciated for calibration and accuracy ideally the same base or tap water used to provide the working water should be used but a library of base tap water results for that locality in terms of Postcode could be used for comparison.

Where suitably prepared dissimilar metal contact elements are immersed in tap or base water, it is typically found that the galvanic current flowing between the contact elements will decay from an initial high value following a curved relationship to a reasonably steady value after some period of time, generally within 5 minutes. Where the water contains an effective corrosion inhibitor the galvanic current follows a similar curved decay relationship with time but the magnitude of the current is markedly lower.

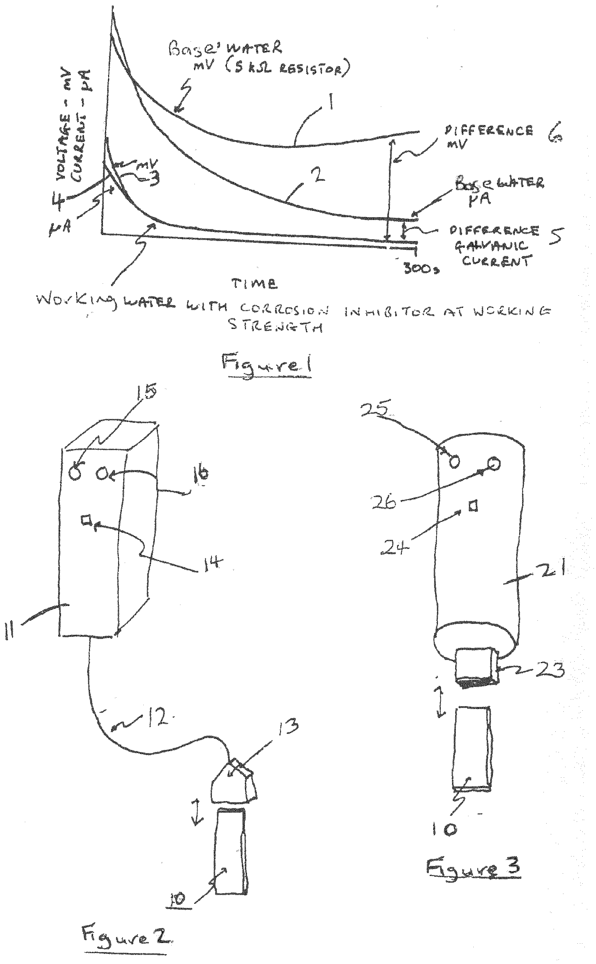

The difference between the galvanic current may be used as an indication of the effectiveness of the inhibitor, of the level of an inhibitor of known effectiveness. For example the galvanic current recorded after a period of time with a probe immersed in a central heating system water sample may be compared against previously determined benchmark values, representing acceptable inhibitor level, borderline inhibitor level, and unacceptable inhibitor level. These results are depicted in figure 1 with line 1 showing voltage and line 2 showing electrical current for base tap water and line 3 showing voltage and line 4 showing electrical current for working water comprising the base water and a corrosion inhibitor at a desired level for corrosion strength in a wet central heating system. The lines 1-4 represent respective decay profiles with a galvanic current difference 5 and a voltage difference 6 with an electrical resistance between the dissimilar metal contacts.

The magnitude of the galvanic current 2 in tap water is very sensitive to the condition of the electrode contact surface. For optimum results, the majority of the two metal elements' contact surfaces need to be clean exposed metal, i.e. free of surface oxide or other films that would prevent the galvanic corrosion reactions from occurring. The sensitivity of the galvanic current in tap water to surface condition offers a convenient means of establishing the suitability of the preparation of the electrode for the inhibitor test. In use it is possible that the contact surface may be maintained clean using an appropriate sheath over the contact surfaces removed just prior to use.

In practice it is found that with dissimilar metal elements of surface area sufficiently small to be suitable for application as a probe for a portable or hand held device, for example up to around 5 cm², the resulting galvanic current is very small, particularly where a corrosion inhibitor is present. Further, the natural curved decay profile 2 of galvanic current with time in base or tap water also presents difficulties where the base water level is to be used to indicate whether the preparation of the metal contact elements is sufficient for corrosion inhibitor level determination to provide adequate protection to a wet central heating system in use with a current working water composition.

The natural decay of galvanic current 2 with time in inhibitor-free tap or base water as described above is due to many factors, including but not limited to the production of corrosion products on one or both metal contact surfaces representative of the metals used in a wet central heating system and consumption of dissolved oxygen available for cathodic reduction.

It is an important aspect of the current invention that the nature of the natural decay of galvanic current 2 with time in tap or base water may be influenced by controlling the kinetics of the galvanic corrosion process. The kinetics of the galvanic corrosion process in tap or base water may be controlled by providing an electrical barrier to galvanic current flow between the two dissimilar metals in the contact elements of a probe. This may be conveniently represented by a resistor circuit element. Where the electrical barrier or resistance is appropriately sized, the decay behaviour or profile 2 is largely prevented and a reasonably steady galvanic current can be achieved in base or tap water after an initial short settling period of decline. For steel and copper dissimilar metal contact elements, the galvanic current can be stabilised with a circuit electrical resistance element in the range 1 kOhm to 50 kOhm, preferably 5 kOhm. Too low a resistance and the galvanic current decay is not sufficiently prevented whilst too high an electrical resistance and the galvanic current is found to show an increasing trend with time, at least over several minutes (see later part of line 2). It is found that the curved decay behaviour of galvanic current with time in tap or base water containing an effective corrosion inhibitor is not appreciably affected by an electrical resistor circuit element as described above. In the presence of an effective corrosion inhibitor it is considered that the decay in galvanic current is dominated by the nature of the inhibiting action of the inhibitor, which is unaffected by the resistor circuit element. This difference between base water profile and working water profile with corrosion inhibitor is used by preferred aspects of the present invention.

A further advantage of introducing a resistor circuit element between the two dissimilar metal elements is that the natural voltage drop 1 arising across the resistor as a result of the galvanic current flowing may be measured as an alternative to galvanic current, which provides an effective means of overcoming the difficulties involved in measuring very low electrical current levels produced by dissimilar metal contact element probes of portable dimensions. It is found that voltage recorded across a preferred 5 kOhm resistor circuit element falls conveniently in the range 1 to 200 mV, which may be measured using relatively inexpensive instrumentation compared with a zero resistance ammeter apparatus.

It will be appreciated from the above that expressing galvanic behaviour between copper and steel metal elements in terms of the voltage drop across an appropriate resistor circuit element placed in series between them has two main benefits: the magnitude of the voltage drop across the resistor is of the order of mVs, which may be measured using inexpensive and available instrumentation, and the effect of the resistor circuit element in stabilising the galvanic signal with time in tap or base water markedly amplifies the difference in behaviour between tap or base water profile and a working water sample profile containing an effective corrosion inhibitor within the timeframe of the test (Figure 1).

Aspects of the present invention are concerned with a test device to be used in conjunction with a method for determining whether the level of corrosion protection afforded by a corrosion inhibitor in a wet central heating system working water sample is acceptable. The device and method operate by determining the voltage arising across a resistor circuit element placed in series between two dissimilar metal contact elements immersed in the working water sample.

Figure 2 and figure 3 illustrate test devices in accordance with aspects of the present invention. Each device comprises two parts; a sensing probe 10 and an electronics module 11, 21 for measurement and display. The two parts 10 & 11, 21 may be separate (see figure 2), for example linked by a cable 12 and connector 13, or contained in an integral unit 21 with a connector 23 to the unit 21 (Figure 3) for a test or sensing probe 10 element.

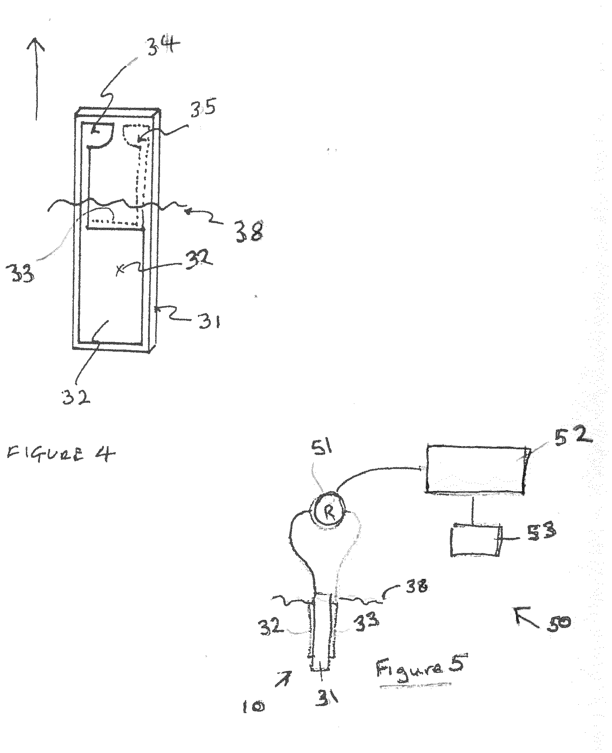

The sensing probe 10 comprises two contact elements or electrodes, these being metallic components of dissimilar metals. For the present invention the preferred option is one contact element fabricated from mild steel and one contact element fabricated from copper, these being common central heating system metals with suitable galvanic corrosion characteristics, although other dissimilar metal combinations are possible. The contact elements may be of any suitable geometry and shape. In the present invention the preferred option is contacts which are substantially identical mirror-image thin foil rectangular shapes with a surface area of about 1.2 cm² attached on opposite sides of a non-conducting insulating substrate 31 (Figure 4). Other shapes and presentations are possible, such as rods, sheets or plates of similar or different dimensions. In the present invention the preferred option is that the probes 10 are easily demountable, for example by a push-fit arrangement, and a new probe 10 will be used for each test. However, replaceable re-useable probes or fixed non-replaceable re-useable probes are also possible subject to ensuring the surfaces remain clean for consistency of performance.

The electronics module 11, 21 will record the electrical voltage across a suitable sized resistor located in series between the two sensing contact elements as described above. The electronics module 11, 21 will contain a programmable function that will follow the testing methodology and indicate the result, possibly by coloured lights 14, 24, possibly by a digital display, or possibly by an analogue display. Where the result is displayed using coloured lights 14, 24 it is envisaged that these will be light emitting diodes (LEDS) or similar devices, and that the colour options will be red, yellow, green, orange and blue, although other options are possible, and that these may flash intermittently, at either regular or irregular intervals, or be continuously illuminated once lit.

With the system as described above, whether an acceptable level of corrosion protection is afforded by a corrosion inhibitor present in a central heating system working water sample may be determined by recording the electrical voltage after a pre-determined period of time with the probe 10 immersed in a working water sample from central heating system, and relating this to benchmark electrical voltage values representing acceptable central heating system corrosion protection levels. The benchmark electrical voltage values relate to the ability of the corrosion inhibitor present to protect a fresh metal surface and not to any particular chemical ingredient or particular source or supplier's corrosion inhibitor type, and hence the same voltage, or if necessary electrical current, values may be applied to all chemical inhibitors in a working water sample taken for the purposes of determining level of corrosion inhibitor effectiveness.

Prior to immersion in the working water sample from a central heating system the suitability of the preparation of the metal electrodes or contact surfaces of the probe 10 may be determined by recording the electrical voltage generated with the probe 10 immersed in a tap or base water sample after a pre-determined period of time, and relating or calibrating this to a benchmark value representing adequate preparation of the contacts taken from and stored in a reference library of decay profiles (line 1 in figure 1).

The probe 10 preparation process is essential to condition the sensing contact elements ready for the test, by producing clean, reactive metal surfaces. In the current invention the preferred preparation option is wiping briefly with an abrasive medium to an even abraded finish, however other processes are possible, such as chemical cleaning. A sheath may also be provided which is removed just prior to use.

It is envisaged that the method described above will be part of a test procedure. It is envisaged that the steps and time intervals involved in the procedure will be built into the electronics module 11, 21 in a pre-programmed memory circuit element. An appropriate test methodology would be: preparing the probe 10 for use by conditioning the metal electrode contact surfaces; inserting the probe 10 into the electronics module 11, 21 with the probe connector/terminal 13, 23; activating the electronics module 11, 21 in the probe condition test mode (indicated by a coloured light 15, 25, for example a flashing yellow LED); immersing the probe 10 into a tap or base water sample; waiting a pre-determined period of time for the electronics module 11, 21 to indicate whether the probe 10 is suitably conditioned or not (indicated by a coloured light 16, 26, for example a flashing blue LED for acceptable or flashing red LED for not acceptable); where the probe 10 is not acceptable the probe 10 is re-prepared and the above steps repeated; where the probe 10 is acceptable the probe 10 is removed from the tap or base water sample and dried; the electronics module 11, 21 is activated in working water sample test mode (indicated by a coloured light 16, 26, for example a flashing orange LED); the probe 10 is immersed in the sample of working water from the central heating system and left; after a pre-determined period of time the result is displayed (indicated by a coloured light 14, 24, for example continuous red LED for fail, yellow LED for Intermediate, green LED for pass). The predetermined period of time for the probe 10 condition test is any time between 1 and 30 seconds, although the preferred option is 5 seconds. The pre-determined period of time for the working water sample from a central heating system test is 1 to 10 minutes, although the preferred option is 4 minutes. Other test methodologies are possible. The test itself is to determine the threshold difference and whether it is consistent with an adequate level of protection afforded by the corrosion inhibitor present within the working water of the wet central heating system.

It will be appreciated that the invention may be used to establish inhibitor effectiveness in any situation where a chemical corrosion inhibitor is added to water to control corrosion in a metallic system.

It will be appreciated from the above that the probe 10 whether connected by a cable 12 or directly to the electronics module is configured to provide the necessary configuration and method of aspects of the present invention. Figure 4 provides a schematic illustration of the probe 10. The non-conducting support substrate 31 presents respective contact surfaces 32, 33 of dissimilar metal as mirror images on opposite sides of the substrate 31 with respective contact pads 34, 35 so that the probe 10 can be connected by connectors 13, 23 (figures 2 & 3) to the electronic modules 11, 21 as required in use. The contact surfaces 32, 33 will as illustrated be immersed in a test sample, whether it be the base water or the working water, below a level 38 to provide a connection through the water between the contact surfaces 32, 33.

The contact surfaces 32, 33 are normally formed from thin foil appropriately secured to the substrate 31 with possibly a sheath extending over the surfaces 32, 33 prior to use to prevent contamination and keep the surfaces 32, 33 clean. The pads 34, 35 will allow the probe 10 to be attached as a push fit to the connectors 13, 23. Probes 10 may be colour co-ordinated so that for example the dissimilar metal contact elements may be matched to the wet central heating system so that each colour of non-conducting substrate indicates a combination of a particular copper alloy with a particular steel if that level of investigation is required. Probes 10 of different sizes and in particular contact element surface area may be provided to accommodate different situations in terms of electrical response and sensitivity with each surface area matched with the threshold difference 6 (figure 1) determining if there is sufficient level of corrosion protected afforded by the corrosion inhibitor in the working water for acceptable operation.

In the embodiment of the present invention, an electrical resistance element is provided to effectively stabilise the voltage across the element in series between be dissimilar metal contact elements 32, 33 (figure 4). Thus, it is easier to measure the voltage threshold 6 than the much small galvanic current threshold 5 as an indicator of corrosion protection. The electrical resistance level is important to achieve this result and will normally be in a range 1KΩ to 50KΩ but this will depend upon dissimilar metal type and exposed contact surface area. The electrical resistance may normally be fixed for a particular test device or possibly adjustable for fine tuning in use to provide the stabilisation in the base or tap water 'calibration' decay profile stage of operation.

Figure 5 provides a schematic illustration of a test device 50 in accordance with the present invention. The device has a probe 10 as previously with contact surfaces 32, 33 either side of a non-conducting substrate 31. The contact surfaces 32, 33 are immersed in working water, or base water, as required with the contact surfaces 32, 33 connected to an electrical resistance element 51. An electronic module 52 in the form of a meter is connected to the element 51 to monitor the voltage, or electrical current and process the results. An indicator device 53 is connected to the module 52 to indicate the results in terms of corrosion inhibitor effectiveness.

It will be appreciated that the electronic module if aware of the approximate volume of working water in a subject wet central heating system and the determined level of effectiveness of the corrosion inhibitor in a working water sample could provide an indication for the necessary volume of fresh corrosion inhibitor to add in order to achieve an acceptable working operational strength.

Modifications and alterations to the embodiments of aspects of the present invention described above will be appreciated by persons skilled in the technology so for example the threshold difference between the base water decay profile and the working water decay profile may be adjusted at which the indicator is triggered.

It will be appreciated by those skilled in the art that any number of combinations of the aforementioned features and/or those shown in the appended drawings provide clear advantages over the prior art and are therefore within the scope of the invention described herein.

## Claims

1. A test device (10, 11,21) for determining the level of effectiveness of a corrosion inhibitor present in a wet central heating system, the device comprising a probe element (10) with a first contact (32) and a second contact (33), the first contact (32) and the second contact (33) formed from dissimilar metals, the contacts (32, 33) electrically connected to provide respectively through a comparison element, a base water decay profile for a base water sample and a working water decay profile for a working water sample over a time period where the working water comprises the base water with a corrosion inhibitor and the comparison element providing means to compare the base water profile with the working water profile to determine a threshold difference indicative of the presence of a corrosion inhibitor in the working water and provide an indication of the level of effectiveness afforded by the corrosion inhibitor present, the device **characterised in that** the contacts (32, 33) are connected through an electrical resistance element (51) with an electrical resistance value to substantially stabilise the electrical current and/or the voltage across the electrical resistance element (51) to inhibit the base water decay profile after an initial fall to a substantially stable value whilst allowing the working water decay to continue so that determination of the threshold difference is set at a fixed time after the probe element is exposed to the working water.

2. A device as claimed in claim 1 wherein the base water decay profile is taken from a library of such profiles for a location determined by geographic location (postcode) or historical prior determinations as reference base water decay profiles stored in the comparison element.

3. A device as claimed in claim 1 or claim 2 wherein the dissimilar metals for the contacts are chosen based upon the expected or predominant material in a wet central heating system within which the working water flows in use.

4. A device as claimed in any of claims 1 to 3 wherein the contacts are formed from a foil.

5. A device as claimed in any preceding claim wherein the probe has connectors whereby the probe is selectively attached to the remainder of the test device as required and dismounted after use and the contacts are sheathed by a sheath element prior to use to ensure the surfaces of the contacts remains clean.

6. A device as claimed in any preceding claim wherein the comparison element records the working water decay profile against time for comparison with the base water decay profile.

7. A device as claimed in any preceding claim wherein the test device and/or the comparison element are provided with a value for the approximate volume of working water in a wet central heating system whereby the indicator provides an indication of a level of necessary fresh corrosion inhibitor needed to be added to achieve the desired level of effectiveness of the corrosion inhibitor in the whole volume of working water.

8. A device as claimed in claim 8 wherein the comparison device determines the level of necessary fresh corrosion inhibitor to be added for a range of different corrosion inhibitor sources and solutions.

9. A method of determining corrosion inhibitor effectiveness in a wet central heating system, the method comprising:-
a) Determining a base water decay profile over a time period for electrical current or voltage for a sample of base water between two dissimilar metal contacts (32, 33) in the base water;
b) Determining a working water electrical current or voltage decay profile for a working water sample comprising the base water and a volume of corrosion inhibitor; and,
c) Comparing the base water decay profile with the working water decay profile whereby a threshold difference is indicative of a desired level of effectiveness of the corrosion inhibitor in the working water, the method **characterised in that**:-
d) the contacts (32, 33) are connected through an electrical resistance element (51) with an electrical resistance value to substantially stabilise the electrical current and/or the voltage across the electrical resistance element (51) to inhibit the base water decay profile after an initial fall to a stable value whilst allowing the working water decay to continue so that determination of the threshold difference is set at a fixed time after the probe element (10) is exposed to the working water.

10. A method as claimed in claim 9 wherein the comparison element records the working water decay profile against time for comparison with the base water decay profile.

11. A method as claimed in claim 9 or claim 10 wherein the method uses the threshold to provide a relative determination of the closeness of the desired level of corrosion inhibitor effectiveness in the working water.

12. A method as claimed in any of claims 9 to 11 wherein the method includes determination of a value for the approximate volume of working water in a wet central heating system whereby the method provides an indication of a level of necessary fresh corrosion inhibitor needed to be added to achieve the desired level of corrosion inhibitor effectiveness in the whole volume of working water.

13. A method as claimed in claim 12 wherein the method determines the level of necessary fresh corrosion inhibitor to be added to achieve the desired level of corrosion protection for a range of different corrosion inhibitor sources and solutions.

## Patentansprüche

1. Eine Testvorrichtung (10, 11, 21) für das Bestimmen des Effektivitätsgrads eines Korrosionsinhibitors in einem nassen Zentralheizungssystem, die Vorrichtung umfasst ein Fühlerelement (10) mit einem ersten Kontakt (32) und einem zweiten Kontakt (33), der erste Kontakt (32) und der zweite Kontakt (33) sind aus ungleichen Metallen geformt, die Kontakte (32, 33) sind elektrisch verbunden, um über ein Vergleichselement, ein Basiswasser-Zersetzungsprofil für eine Basiswasser-Probe, beziehungsweise ein Arbeitswasser-Zersetzungsprofil für eine Arbeitswasser-Probe über einen Zeitraum bereitzustellen, wobei das Arbeitswasser das Basiswasser mit einem Korrosionsinhibitor beinhaltet und das Vergleichselement eine Vorrichtung bereitstellt, um das Basiswasser-Profil mit dem Arbeitswasser-Profil zu vergleichen, um eine Schwellendifferenz zu bestimmen, die das Vorhandensein eines Korrosionsinhibitors im Arbeitswasser anzeigt, und eine Angabe des Effektivitätsgrads liefert, der von dem vorhandenen Korrosionsinhibitor erreicht wird, die Vorrichtung ist **dadurch gekennzeichnet, dass** die Kontakte (32, 33) über ein elektrisches Widerstandselement (51) mit einem elektrischen Widerstandswert verbunden sind, um im Wesentlichen den elektrischen Strom und/oder die Spannung über das elektrische Widerstandselement (51) zu stabilisieren, um das Basiswasser-Zersetzungsprofil nach einem anfänglichen Rückgang bei einem im Wesentlichen stabilen Wert zu blockieren, während die Zersetzung des Arbeitswassers fortgesetzt wird, so dass eine Bestimmung der Schwellendifferenz auf einen bestimmten Zeitpunkt festgelegt wird, nachdem das Fühlerelement mit dem Arbeitswasser in Kontakt gebracht wurde.

2. Eine Vorrichtung nach Anspruch 1, wobei das Basiswasser-Zersetzungsprofil aus einer Bibliothek von Profilen für einen Standort entnommen ist, der anhand eines geographischen Standorts (Postleitzahl) oder aus früheren historischen Bestimmungen von Referenz-Basiswasser-Zersetzungsprofilen abgeleitet ist, die im Vergleichselement gespeichert sind.

3. Eine Vorrichtung nach Anspruch 1 oder Anspruch 2, wobei die ungleichen Metalle für den Kontakt basierend auf dem erwarteten oder vorherrschenden Material in einem nassen Zentralheizungssystem ausgewählt sind, in dem das Arbeitswasser im Betrieb fließt.

4. Eine Vorrichtung nach einem der Ansprüche 1 bis 3, wobei die Kontakte aus einer Metallfolie geformt sind.

5. Eine Vorrichtung nach einem der vorhergehenden Ansprüche, wobei der Fühler über Anschlüsse verfügt, durch die der Fühler selektiv wie erforderlich am Rest der Testvorrichtung angebracht ist und nach dem Einsatz wieder abgenommen wird und die Kontakte werden vor dem Einsatz mit einem Ummantelungselement umgeben, um sicherzustellen, dass die Oberflächen der Kontakte sauber bleiben.

6. Eine Vorrichtung nach einem der vorhergehenden Ansprüche, wobei das Vergleichselement das Arbeitswasser-Zersetzungsprofil über die Zeit aufzeichnet, um es mit dem Basiswasser-Zersetzungsprofil zu vergleichen.

7. Eine Vorrichtung nach einem der vorhergehenden Ansprüche, wobei die Testvorrichtung und/oder das Vergleichselement mit einem Wert des ungefähren Volumens des Arbeitswassers in einem nassen Zentralheizungssystems bereitgestellt wird, wodurch der Indikator eine Anzeige eines notwendigen Niveaus an frischem Korrosionsinhibitor liefert, das hinzugefügt werden muss, um den gewünschten Effektivitätsgrad des Korrosionsinhibitors im Gesamtvolumen des Arbeitswassers zu erreichen.

8. Eine Vorrichtung nach Anspruch 8, wobei die Vergleichsvorrichtung das notwendige Niveau an frischem Korrosionsinhibitor bestimmt, der für ein Sortiment verschiedener Korrosionsinhibitor-Quellen und -Lösungen hinzugefügt werden muss.

9. Ein Verfahren zum Bestimmen einer Korrosionsinhibitor-Effektivität in einem nassen Zentralheizungssystem, das Verfahren umfassend:-
a) Bestimmen eines Basiswasser-Zersetzungsprofils über einen bestimmten Zeitraum für einen elektrischen Strom oder eine Stromspannung in einer Basiswasser-Probe zwischen zwei ungleichen Metallkontakten (32, 33) im Basiswasser;
b) Bestimmen eines elektrischen Strom- oder Stromspannungs-Zersetzungsprofils des Arbeitswassers für eine Arbeitswasser-Probe, die das Basiswasser und ein Volumen eines Korrosionsinhibitors umfasst; und,
c) Vergleichen des Basiswasser-Zersetzungsprofils mit dem Arbeitswasser-Zersetzungsprofil, wodurch eine Schwellendifferenz einen gewünschten Effektivitätsgrad des Korrosionsinhibitors im Arbeitswasser anzeigt, das Verfahren **dadurch gekennzeichnet, dass**:-
d) die Kontakte (32, 33) über ein elektrisches Widerstandselement (51) mit einem elektrischen Widerstandswert verbunden sind, um im Wesentlichen den elektrischen Strom und/oder die Spannung über das elektrische Widerstandselement (51) zu stabilisieren, um das Basiswasser-Zersetzungsprofil nach einem anfänglichen Rückgang bei einem im Wesentlichen stabilen Wert zu blockieren, während die Zersetzung des Arbeitswassers fortgesetzt wird, so dass eine Bestimmung der Schwellendifferenz auf einen bestimmten Zeitpunkt festgelegt wird, nachdem das Fühlerelement (10) mit dem Arbeitswasser in Kontakt gebracht wurde.

10. Eine Vorrichtung nach Anspruch 9, wobei das Vergleichselement das Arbeitswasser-Zersetzungsprofil über die Zeit aufzeichnet, um es mit dem Basiswasser-Zersetzungsprofil zu vergleichen.

11. Ein Verfahren nach Anspruch 9 oder Anspruch 10, wobei das Verfahren den Schwellenwert nutzt, um eine relative Bestimmung der Nähe des gewünschten Effektivitätsgrads des Korrosionsinhibitors im Arbeitswasser zu liefern.

12. Ein Verfahren nach einem der Ansprüche 9 bis 11, wobei das Verfahren das Bestimmen eines Werts für das ungefähre Volumen des Arbeitswassers in einem nassen Zentralheizungssystems beinhaltet, wodurch das Verfahren eine Anzeige eines notwendigen Niveaus an frischem Korrosionsinhibitor liefert, das hinzugefügt werden muss, um den gewünschten Effektivitätsgrad des Korrosionsinhibitors im Gesamtvolumen des Arbeitswassers zu erreichen.

13. Ein Verfahren nach Anspruch 12, wobei das Verfahren das notwendige Niveau an frischem Korrosionsinhibitor bestimmt, das für ein Sortiment verschiedener Korrosionsinhibitor-Quellen und -Lösungen hinzugefügt werden muss.

## Revendications

1. Dispositif de test (10, 11, 21) destiné à déterminer le niveau d'efficacité d'un inhibiteur de corrosion présent dans un système de chauffage central à eau, le dispositif comprenant un élément de sonde (10) avec un premier contact (32) et un second contact (33), le premier contact (32) et le second contact (33) formés à partir de métaux dissemblables, les contacts (32, 33) connectés électriquement pour fournir respectivement par le biais d'un élément de comparaison, un profil de décroissance de l'eau de base destiné à un échantillon d'eau de base et un profil de décroissance de l'eau de travail destiné à un échantillon d'eau de travail pendant une période de temps dans laquelle l'eau de travail comprend l'eau de base comportant un inhibiteur de corrosion et l'élément de comparaison fournissant le moyen de comparer le profil de l'eau de base avec le profil de l'eau de travail pour déterminer un seuil de différence indiquant la présence d'un inhibiteur de corrosion dans l'eau de travail et pour fournir une indication du niveau d'efficacité offert par l'inhibiteur de corrosion présent, le dispositif **caractérisé en ce que** les contacts (32, 33) sont connectés par l'intermédiaire d'un élément de résistance électrique (51) comportant une valeur de résistance électrique pour stabiliser pratiquement le courant et/ou la tension électrique à travers l'élément de résistance électrique (51) pour inhiber le profil de décroissance de l'eau de base après une chute initiale à une valeur pratiquement stable tout en autorisant la décroissance de l'eau de travail à continuer de manière à ce que la détermination de la différence de seuil soit réglée à un moment fixé après que l'élément de sonde soit exposé à l'eau de travail.

2. Dispositif selon la revendication 1, dans lequel le profil de décroissance de l'eau de base est pris à partir d'une bibliothèque de tels profils pour un emplacement déterminé par des déterminations antérieures de l'emplacement géographique (code postal) ou historique comme profils de référence de décroissance de l'eau de base mémorisés dans l'élément de comparaison.

3. Dispositif selon la revendication 1 ou la revendication 2, dans lequel les métaux dissemblables destinés aux contacts sont choisis en fonction du matériau attendu ou prédominant dans un système de chauffage central à eau à l'intérieur duquel l'eau de travail coule lors de l'utilisation.

4. Dispositif selon l'une quelconque des revendications 1 à 3, dans lequel les contacts sont formés à partir d'une feuille.

5. Dispositif selon l'une quelconque des revendications précédentes, dans lequel la sonde possède des connecteurs, grâce à quoi la sonde est reliée de manière sélective au reste du dispositif de test selon le besoin et démontée après l'utilisation et les contacts sont protégés par un élément de gaine avant l'utilisation pour garantir que les surfaces des contacts restent propres.

6. Dispositif selon l'une quelconque des revendications précédentes, dans lequel l'élément de comparaison enregistre le profil de décroissance de l'eau de travail par rapport au temps pour comparaison avec le profil de décroissance de l'eau de base.

7. Dispositif selon l'une quelconque des revendications précédentes, dans lequel le dispositif de test et/ou l'élément de comparaison sont fournis avec une valeur destinée au volume approximatif de l'eau de travail dans un système de chauffage central à eau, grâce à quoi l'indicateur fournit une indication d'un niveau d'inhibiteur de corrosion frais nécessaire requis devant être ajouté pour obtenir le niveau d'efficacité souhaité de l'inhibiteur de corrosion dans l'ensemble du volume d'eau de travail.

8. Dispositif selon la revendication 8, dans lequel le dispositif de comparaison détermine le niveau d'inhibiteur de corrosion frais nécessaire devant être ajouté destiné une gamme de différentes sources et de solutions d'inhibiteur de corrosion.

9. Procédé de détermination de l'efficacité de l'inhibiteur de corrosion d'un système de chauffage central à eau, le procédé comprenant :
a) la détermination d'un profil de décroissance de l'eau de base sur une période de temps pour le courant ou la tension électrique destiné à un échantillon d'eau de base entre deux contacts de métaux dissemblables (32, 33) dans l'eau de base ;
b) la détermination d'un profil de décroissance du courant ou de la tension électrique de l'eau de travail destiné à un échantillon d'eau de travail comprenant l'eau de base et un volume d'inhibiteur de corrosion ; et,
c) la comparaison du profil de décroissance de l'eau de base avec le profil de décroissance de l'eau de travail grâce à quoi une différence de seuil indique un niveau d'efficacité souhaité de l'inhibiteur de corrosion dans l'eau de travail, le procédé **caractérisé en ce que** :
d) les contacts (32, 33) sont connectés par l'intermédiaire d'un élément de résistance électrique (51) comportant une valeur de résistance électrique pour stabiliser pratiquement le courant et/ou la tension électrique à travers la résistance électrique de l'élément (51) pour inhiber le profil de décroissance de l'eau de base après une chute initiale à une valeur stable tout en autorisant la décroissance de l'eau de travail à continuer de manière à ce que la détermination de la différence de seuil soit réglée à un moment fixé après que l'élément de sonde (10) soit exposé à l'eau.

10. Procédé selon la revendication 9, dans lequel l'élément de comparaison enregistre le profil de décroissance de l'eau de travail par rapport au temps pour comparaison avec le profil de décroissance de l'eau de base.

11. Procédé selon la revendication 9 ou la revendication 10, dans lequel le procédé utilise le seuil pour fournir une détermination relative de la proximité du niveau souhaité d'efficacité de l'inhibiteur de corrosion dans l'eau de travail.

12. Procédé selon l'une quelconque des revendications 9 à 11, dans lequel le procédé comprend la détermination de la valeur destinée au volume approximatif de l'eau de travail dans un système de chauffage central à eau, grâce à quoi le procédé fournit une indication d'un niveau d'inhibiteur de corrosion frais nécessaire requis devant être ajouté pour obtenir le niveau souhaité d'efficacité de l'inhibiteur de corrosion dans l'ensemble du volume d'eau de travail.

13. Procédé selon la revendication 12, dans lequel le procédé détermine le niveau d'inhibiteur de corrosion frais nécessaire devant être ajouté pour obtenir le niveau souhaité de protection contre la corrosion destinée à une gamme de différentes sources et de solutions d'inhibiteur de corrosion.
